# EUROPÄISCHE PATENTSCHRIFT

(11) **EP 2 134 779 B1**
(45) Veröffentlichungstag und Bekanntmachung des Hinweises auf die Patenterteilung: **29.04.2015**
(21) Anmeldenummer: 08716042.0
(22) Anmeldetag: 26.02.2008
(51) Int. Cl.: C08K 5/00, C08K 5/3475, C08K 5/3492, C08L 69/00

(54) **POLYCARBONATZUSAMMENSETZUNG ENTHALTEND UV-ABSORBER**
POLYCARBONATE COMPOSITION CONTAINING UV ABSORBER
COMPOSITION DE POLYCARBONATE CONTENANT DES ABSORBEURS D'U.V.

(30) Priorität: 07.03.2007 DE 102007011069
(43) Veröffentlichungstag der Anmeldung: 23.12.2009
(73) Patentinhaber: Bayer Intellectual Property GmbH, 40789 Monheim (DE)
(72) Erfinder: RÜDIGER, Claus, 47829 Krefeld (DE); WAGNER, Michael, 47443 Moers (DE)
(74) Vertreter: BIP Patents
(86) Internationale Anmeldenummer: PCT/EP2008/001502
(87) Internationale Veröffentlichungsnummer: WO 2008/107095

(56) Entgegenhaltungen:
- EP-A- 1 308 084
- WO-A-2005/030856

## Beschreibung

Die vorliegende Erfindung betrifft eine Polycarbonatzusammensetzung enthaltend Polycarbonat und 0,1 Gew-% bis 0,35 Gew-% eines UV-Absorbers gemäß Anspruch 1 und 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1).

Stabilisatoren für polymere Formmassen sowie mit diesen ausgerüstete Formmassen sind vielfältig in der Literatur beschrieben worden. Hierbei sollen die positiven inhärenten Materialeigenschaften der polymeren Formmassen durch die Stabilisatoren auch bei äußern Einflüssen, die das Eigenschaftsbild der Polymere negative beeinflussen können, weiterhin auf einem hohen Niveau gehalten werden. Insbesondere bei Anwendungen von Polymeren im Außenbereich ist die Stabilisierung gegenüber einer Schädigung durch Licht ein wichtiger Aspekt für eine langfristige Verwendbarkeit der entsprechenden Formkörper. Bei letzteren kann es sich beispielsweise um Platten aus thermoplastischen Kunststoffen wie z.B. Polycarbonaten handeln, die unter anderem in Form von Massivplatten, Stegplatten, Doppelstegplatten, Wellplatten, Profilen, entsprechenden Mehrschichtsystemen oder weiteren Ausführungsformen Verwendung finden. Hier ist es jedoch nicht nur von Bedeutung, dass die Formkörper nach Bewitterung auch weiterhin ansprechende optische Eigenschaften zeigen. Vielmehr müssen zeitgleich auch die mechanischen Eigenschaften der Formkörper auf einem hohen Niveau erhalten bleiben, um langfristig deren konstruktive Integrität bzw. Stabilität auch bei widrigen Umweltverhältnissen gewährleisten zu können.

In diesem Zusammenhang beschreiben die US 6,218,450 sowie die US 6,352,783 spezifische Copolyester Blends mit UV-Absorbern, die unter anderem zur Herstellung von Schutzschichten für thermogeformte Artikel mit guten Oberflächeneigenschaften sowie guten physikalischen Eigenschaften verwendet werden.

In der US 2002/0083641 wird die Stabilisierung dünner Polyolefin-, Polyester- oder Polyamidschichten mit Hydroxyphenyltriazinen gegen die Schädigung durch Licht, Sauerstoff, Hitze und aggressive Chemikalien offenbart.

Die US 6,632,864 beschreibt thermoplastische Polymere, die mit UV-Absorbern des Benzotriazoltyps ausgerüstet sind. Zudem wird die Verwendung solcher Polymere für die Extrusion von Platten mit guter Oberflächenqualität und gutem UV-Schutz offenbart.

In der WO 02/34826 werden thermoplastische Kunststoffe, die mit UV-Absorbern vom Benzotriazol- und Triazintyp ausgestattet sind sowie Erzeugnisse hieraus offenbart. Die Kunststoffe zeigen bei Extrusion, insbesondere bei längerer kontinuierlicher Verarbeitung eine gute Oberflächenqualität sowie einen gleich bleibenden Schutz gegen UV-Strahlung.

Die DE 19739797 beschreibt Gemische unterschiedlicher Triazinverbindungen zur Verwendung als Stabilisatoren für organische Materialien, insbesondere von Lacken, gegen Schädigung durch Licht, Wärme und Sauerstoff.

Die EP-A-1 308 084 offenbart Gemische von Verbindungen der 2,4-bis-(4-phenylphenyl)-6-(2-hydroxyphenyl)-1,3,5-triazin Klasse mit weiteren ausgewählten UV-Absorbern zur Stabilisierung organischer Materialien gegen die Schädigung durch Licht, Wärme und Sauerstoff.

Bekannt ist weiterhin die Verwendung von 2-[2-Hydroxy-4-(2-ethylhexyl)oxy]phenyl-4,6-di(4-phenyl)phenyl-1,3,5-triazin (CAS No. 204583-39-1) als UV-Absorber, wie in EP 1308084 beschrieben ist.

Eine Aufgabe der vorliegenden Erfindung ist die Bereitstellung UV-stabilisierter Polycar-bonatzusammensetzungen, die neben guten optischen Eigenschaften gegenüber dem Stand der Technik eine weiter verbesserte Schlagzähigkeit - insbesondere bei tiefen Temperaturen - aufweisen.

Die vorliegende Erfindung betrifft daher eine Zusammensetzung enthaltend Polycarbonat und 0,05 Gew-% bis 0,5 Gew-% eines UV-Absorbers und 0,0001 Gew-% bis 0,03 Gew-% 2-[2-Hydroxy-4-(2-ethylhexyl)oxy]phenyl-4,6-di(4-phenyl)phenyl-1,3,5-triazin (CAS No. 204583-39-1).

Die derartige Zusammensetzung weist unerwartet gute physikalische und mechanische Eigenschaften auf. Insbesondere zeigen derartige Polycarbonatzusammensetzungen nach UV-Licht-Bestrahlung bei tiefen Temperaturen von -20 °C eine verbesserte Kerbschlagzähigkeit. Derartige Polycarbonatzusammensetzungen sind besonders geeignet für den Einsatz in Massivplatten oder Stegplatten. Weiterhin können sie als Basis von Mehrschichtsystemen Verwendung finden. Deshalb betrifft die vorliegende Erfindung unter anderem auch eine Mehrschichtplatte, welche eine Basisschicht aufweist, wobei die Basisschicht die Zusammensetzung enthält.

Die Zusammensetzung umfasst im Rahmen der vorliegenden Erfindung Stoffe, Materialien, Werkstoffe, Substanzen, und/oder deren Mischungen. Hierbei ist die Zusammensetzung mindestens aus drei Ausgangsmaterialien aufgebaut, nämlich mindestens aus einem Polycarbonat in Kombination mit 2-[2-Hydroxy-4-(2-ethylhexyl)oxy]phenyl-4,6-di(4-phenyl)phenyl-1,3,5-triazin (CAS No. 204583-39-1) sowie einem UV-Absorber als drittem Ausgangsmaterial..

Polycarbonate für die erfindungsgemäßen Zusammensetzungen sind Homopolycarbonate, Copolycarbonate und thermoplastische Polyestercarbonate.

Die erfindungsgemäßen Polycarbonate und Copolycarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbonat-Eichung).

Sie haben in diesem Rahmen weiterhin bevorzugt mittlere Molekulargewichte M̅_{w} von 18.000 bis 40.000 g/mol, besonders bevorzugt von 26.000 bis 36.000 g/mol und insbesondere bevorzugt von 28.000 bis 35.000 g/mol, ermittelt durch Messung der rel. Lösungsviskosität in Dichlormethan bei 25 °C oder in Mischungen gleicher Gewichtsmengen Phenol/o-Dichlorbenzol geeicht durch Lichtstreuung bzw. mittels Gelpermeationschromatographie (GPC) mit Polycarbonat-Eichung.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydro-xyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert

Kohlensäurediester im Sinne der Erfindung sind solche der Formel (1) und (2) 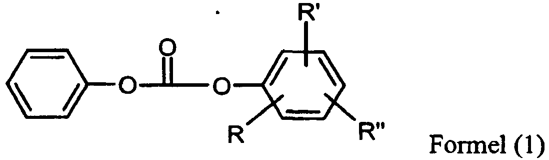 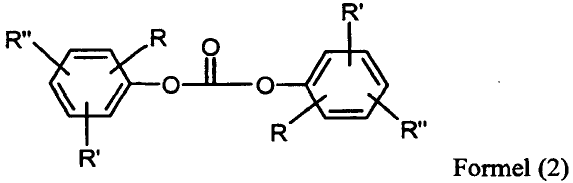 wobei
- R, R' und R": unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat,
Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat,
4-Phenoxyphenyl-phenylcarbonat, Di-(4-Phenoxyphenyl)carbonat, 3-Pentadecylphenylphenylcarbonat, Di-(3-Pentadecylphenyl)carbonat, Tritylphenyl-phenylcarbonat, Di-Tritylphenylcarbonat,
bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (3) 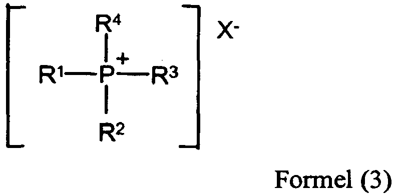 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{W} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Den erfindungsgemäßen Polycarbonaten und Copolycarbonaten können noch andere aromatische Polycarbonate und/oder andere Kunststoffe wie aromatische Polyestercarbonate, aromatische Polyester wie Polybutylenterephthalat oder Polyethylenterephthalat, Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Den erfindungsgemäßen Polycarbonaten sowie den ggf. weiteren enthaltenen Kunststoffen können noch die für diese Thermoplasten üblichen Additive wie Füllstoffe, weitere UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination). Solche Verbindungen werden z. B. in WO 99/55772, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

UV-Absorber bedeutet im Rahmen der vorliegenden Erfindung eine Verbindung, die UV-Strahlen im wesentlichen absorbiert.

Der Ausdruck "im wesentlichen" bedeutet im Rahmen der vorliegenden Erfindung, dass die gewünschten oder geforderten Eigenschaften eines Systems auch bei mathematisch insignifikanter Abweichung erhalten bleiben. Bevorzugt werden dabei 80%, 90% oder 95% der betrachteten Zielgröße erreicht.

Alkylaryl bedeutet im Rahmen der vorliegenden Erfindung einen Alkylrest, der einen Arylrest trägt.

In einer bevorzugten Ausführungsform hat der UV-Absorber die Formel (4): 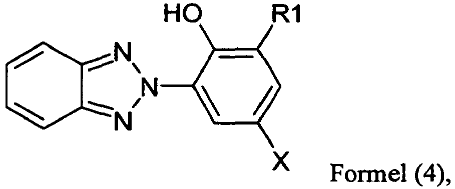 wobei R1 und X gleich oder verschieden und H oder Alkyl oder Alkylaryl sein können,
oder die Formel (6): 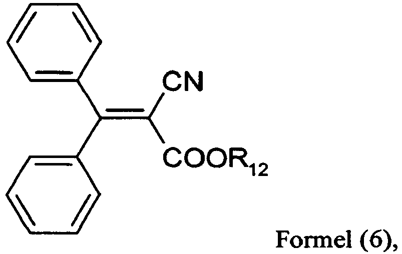 worin R₁₂ Aryl oder Alkyl bedeutet.

Besonders bevorzugt sind folgende UV-Absorber:
A. 2-(5-chloro-2H-benzotriazol-2-yl)-6-(1,1-dimethylethyl)-4-methyl)-phenol (CAS No. 3896-11-5), der unter dem Namen Tinuvin 326® bei der Fa. Ciba Spezialitätenchemie oder unter dem Namen Uvinul® 3026 bei der BASF AG kommerziell erhältlich ist.
B. 1,3-bis-[(2'-cyano-3',3'-diphenylacryloyl)oxy]-2,2-bis-{[(2'-cyano-3',3'-diphenylacryloyl)oxy]methyl}-propan (CAS No. 178671-58-4), der unter dem Namen Uvinul® 3030 bei der BASF AG kommerziell erhältlich ist.

In einer weiteren Ausführungsform betrifft die vorliegende Erfindung die erfindungsgemäße Zusammensetzung, dadurch gekennzeichnet, daß der UV-Absorber und 2-[2-Hydroxy-4-(2-ethylhexyl)oxy]phenyl-4,6-di(4-phenyl)phenyl-1,3,5-triazin (CAS No. 204583-39-1) in einem Gewichtsverhältnis von 5000 : 1 bis 30 : 1, bevorzugt 500 : 1 bis 30 : 1, besonders bevorzugt 500 : 1 bis 70 : 1 vorliegen.

In einer weiteren Ausführungsform betrifft die vorliegende Erfindung die erfindungsgemäße Zusammensetzung, dadurch gekennzeichnet dass die Zusammensetzung im wesentlichen aus Polycarbonat und 0,1 Gew-% bis 0,35 Gew-% eines UV-Absorbers und 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1) besteht. In einer weiteren Ausführungsform betrifft die vorliegende Erfindung die erfindungsgemäße Zusammensetzung, dadurch gekennzeichnet, dass die Zusammensetzung aus Polycarbonat und 0,1 Gew-% bis 0,35 Gew-% eines UV-Absorbers und 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1) besteht.

Die erfindungsgemäße Zusammensetzung enthält 0,1 Gew-% bis 0,35 Gew-% UV-Absorber sowie 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1), wobei sich die Gew% Angaben jeweils auf die Gesamtzusammensetzung beziehen.

### Herstellung der Zusammensetzung

Die Herstellung einer Zusammensetzung enthaltend Polycarbonat und 0,1 Gew-% bis 0,35 Gew-% eines UV-Absorbers und 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1) erfolgt mit gängigen Einarbeitungsverfahren und kann beispielsweise durch Vermischen von Lösungen der UV-Absorber und des 2-[2-Hydroxy-4-(2-ethylhexyl)oxy]phenyl-4,6-di(4-phenyl)phenyl-1,3,5-triazins mit einer Lösung von Polycarbonat in geeigneten Lösungsmitteln wie Dichlormethan, Halogenalkanen, Halogenaromaten, Chlorbenzol und Xylolen erfolgen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudem (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

### Herstellung von Polycarbonatplatten:

Coextrudierte Polycarbonatmassivplatten können z. B. mit Hilfe folgender Maschinen und
Apparate hergestellt werden:
   - den Hauptextruder mit einer Schnecke der Länge 33 D und einem Durchmesser von 70 mm mit Entgasung
   - einen Coextruder zum Aufbringen der Deckschicht mit einer Schnecke der Länge 25 D und einem Durchmesser von 35 mm
   - eine speziellen Coextrusions-Breitschlitzdüse mit 450 mm Breite
   - einen Glättkalander
   - eine Rollenbahn
   - eine Abzugseinrichtung
   - eine Ablängvorrichtung (Säge)
   - einen Ablagetisch.

Coextrudierte Polycarbonatstegplatten können z. B. mit Hilfe folgender Maschinen und Apparate hergestellt werden:
- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Bei beiden Plattentypen wird das Polycarbonat-Granulat des Basismaterials dem Fülltrichter des Hauptextruders zugeführt, das Coextrusionsmaterial dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen einen Verbund. Die weiteren Einrichtungen dienen dem Transport, Ablängen und Ablegen der extrudierten Platten.

Platten ohne Coextrusionsschicht werden entsprechend hergestellt, indem entweder der Coextruder nicht betrieben wird oder mit der gleichen Polymerzusammensetzung wie der Hauptextruder befüllt wird. Die vorliegende Erfindung betrifft daher auch ein Verfahren zur Herstellung einer erfindungsgemäßen Platte, umfassend die Schritte Extrudieren und Kalandrieren einer erfindungsgemäßen Zusammensetzung.

Die vorliegende Erfindung betrifft auch ein Verfahren zur Herstellung einer erfindungsgemäßen Zusammensetzung, dadurch gekennzeichnet dass Polycarbonat und 0,05 Gew-% bis 0,5 Gew-% eines UV-Absorbers und 0,0001 Gew-% bis 0,03 Gew-% der Verbindung 2-[2-Hydroxy-4-(2-ethylhexyl)oxy]phenyl-4,6-di(4-phenyl)phenyl-1,3,5-triazin (CAS No. 204583-39-1) zusammengeführt und vermischt werden, gegebenenfalls in Lösungsmittel, wobei gegebenenfalls homogenisiert wird und das Lösungsmittel entfernt wird.

### Mechanische Eigenschaften:

Untersuchungen zu mechanischen Eigenschaften der Zusammensetzungen können nach folgenden Normen durchgeführt werden:
Die Schlagzähigkeit lässt sich nach DIN EN ISO 180, EN ISO 20180, ASTM D256, DIN EN ISO 179, DIN EN 20179, DIN 53453 oder entsprechenden Normen bestimmen.
Die Bestimmung der IZOD-Kerbschlagzähigkeit kann hierbei z.B. nach ISO 180/1A, ISO 180/1AR oder nach ISO 180/1B an Probekörpern der Geometrie 80 * 10 * 4 mm³ erfolgen oder nach ISO 180/4A an Probekörpern der Geometrie 63,5 * 12,7 * 3,2 mm³.
Die Messung der Kerbschlagzähigkeit nach Charpy wird z.B. nach ISO 179/1eA, ISO 179/1eB oder ISO 179/1eC bzw. ISO 179/1fA, ISO 179/1fB oder ISO 179/1fC an Probekörpern der Geometrie 80 * 10 * 4 mm³ oder 63,5 * 12,7 * 3,2 mm³ durchgeführt.
Die Schlagzugzähigkeit gekerbter wie ungekerbter Probekörper lässt sich nach DIN EN ISO 8256, DIN EN 28256, DIN 53448, oder entsprechenden Normen ermitteln.

Weitere mechanische Kennwerte wie Zugmodul, Streckspannung, Streckdehnung, Bruchspannung, Bruchdehnung oder Nominelle Bruchdehnung lassen sich aus einem Zugversuch gemäß DIN EN ISO 527, DIN EN 20527, DIN 53455/53457, DIN EN 61, ASTM D638 oder entsprechenden Normen erhalten.

Spannungs- und Dehnungskennwerte wie z. B. Biege-Elastizitätsmodul, Biegespannung bei konventioneller Durchbiegung (3,5 % Biegespannung), Biegefestigkeit, Biegedehnung bei Biegefestigkeit, Biegespannung bei Bruch oder Biegedehnung bei Bruch liefert ein Biegeversuch nach DIN EN ISO 178, DIN EN 20178, DIN 53452/53457, DIN EN 63, ASTM D790 oder entsprechenden Normen.

Die Vicat-Erweichungstemperatur (VST) lässt sich gemäß DIN ISO 306, ASTM D1525, oder entsprechenden Normen feststellen.

Kraft- und Durchbiegungskennwerte erhält man aus einem Durchstoßversuch nach DIN EN ISO 6603-2 oder entsprechenden Normen.

### Bewitterung:

Die Bewitterung von Proben lässt sich nach verschiedenen Methoden durchführen. Hierzu zählen u.a. das Xenon-WOM Verfahren gemäß ASTM G6, ASTM G151, ASTM G155, DIN EN ISO 4892-2, SAE J 1885 oder VDA 75202, das LSL-WOM Verfahren nach DIN EN ISO 4892-3, der Xenotest^{®} High Energy gemäß DIN EN ISO 4892-2 oder DIN EN 50014, der Sprühnebeltest nach ASTM B117, DIN 50021, DIN EN ISO 7253, DIN EN 9227 oder ISO 11503 sowie der QUV-Test nach ISO 4892-3 oder ASTM G154 und ASTM G53.

### Rheologische Eigenschaften:

Die Bestimmung des Schmelzeindex (MFR, MVR) erfolgt nach ISO 1133 bzw. gemäß ASTM D1238 MVR.

Die Schmelzeviskosität wird gemäß ISO 11443 bzw. DIN 54811 gemessen.

Lösungsviskositäten lassen sich z.B. nach den Normen ISO 1628-1/-4 bzw. DIN 51562-3 ermitteln.

### Optische Messungen:

Die Bestimmung des Glanzgrads kann mit einem Reflektometer an Platten der Geometrie 60 * 40 * 2 mm³, wobei neben Dicken von 2 mm auch solche von 3 mm, 3,2 mm und 4 mm in Betracht kommen, erfolgen. Für diese Messung finden die DIN 67530, ISO 2813, ASTM D523 oder entsprechende Normen Anwendung.

Trübungs- und Transmissionsbestimmungen erfolgen gemäß DIN 5036, ASTM D1003, ASTM E179 oder ISO 13468.

Der Yellowness-Index YI wird nach ASTM E313 berechnet.

Reflexionsmessungen können nach DIN 5036 bzw. ASTM E179 durchgeführt werden.

Zur Bestimmung des Graumaßstabs lässt sich die ISO 105-A02 heranziehen.

### Herstellung der Beispiele:

Die Einrichtung zur Compoundierung besteht aus:
   Dosiereinrichtung für die Komponenten
      - Einem gleichlaufenden Zweiwellenkneter (ZSK 53 von der Firma Werner & Pfleiderer) mit einem Schneckendurchmesser von 53 mm
      - Einer Lochdüse zur Ausformung von Schmelzesträngen
      - Einem Wasserbad zur Abkühlung und dem Verfestigen der Stränge
      - Einem Granulator.

Mit Hilfe der oben beschriebenen Compoundiereinrichtung werden folgende Zusammensetzungen der Beispiele 1 bis 33 hergestellt.

Makrolon® 3108 550115 ist kommerziell erhältlich bei der Fa. Bayer MaterialScience AG.

Makrolon® 3108 550115 hat EU-/FDA-Qualität und enthält keinen UV-Absorber. Die Schmelze-Volumenfließrate (MVR) nach ISO 1133 beträgt 6,0 cm³/(10 min) bei 300 °C und 1,2 kg Belastung.

Bei der Herstellung der Compounds wird so vorgegangen, dass zu 95 Gew.% Makrolon® 3108 550115 Granulat 5 Gew.% einer Pulvermischung aus Makrolon® 3108 550115 Pulver, das die in den Beispielen genannten Substanzen enthält, zudosiert wird, so dass die in den Beispielen genannten Mischungen (Compounds) resultieren.

### Beispiele

### Beispiel 1:

- 99,798 Gew.% Makrolon® 3108 550115
- 0,200 Gew.% Tinuvin 350® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 2:

- 99,798 Gew.% Makrolon® 3108 550115
- 0,202 Gew.% Tinuvin 350® der Fa. Ciba

### Beispiel 3:

- 99,800 Gew.% Makrolon® 3108 550115
- 0,200 Gew.% Tinuvin 350® der Fa. Ciba

### Beispiel 4:

- 99,798 Gew.% Makrolon® 3108 550115
- 0,200 Gew.% Tinuvin 329® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 5:

- 99,798 Gew.% Makrolon® 3108 550115
- 0,202 Gew.% Tinuvin 329® der Fa. Ciba

### Beispiel 6:

- 99,800 Gew.% Makrolon® 3108 550115
- 0,200 Gew.% Tinuvin 329® der Fa. Ciba

### Beispiel 7:

- 99,798 Gew.% Makrolon® 3108 550115
- 0,200 Gew.% Tinuvin 234® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 8:

- 99,798 Gew.% Makrolon® 3108 550115
- 0,202 Gew.% Tinuvin 234® der Fa. Ciba

### Beispiel 9:

- 99,800 Gew.% Makrolon® 3108 550115
- 0,200 Gew.% Tinuvin 234® der Fa. Ciba

### Beispiel 10:

- 99,798 Gew.% Makrolon® 3108 550115
- 0,200 Gew.% Tinuvin 326® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 11:

- 99,798 Gew.% Makrolon® 3108 550115
- 0,202 Gew.% Tinuvin 326® der Fa. Ciba

### Beispiel 12:

- 99,800 Gew.% Makrolon® 3108 550115
- 0,200 Gew.% Tinuvin 326® der Fa. Ciba

### Beispiel 13:

- 99,798 Gew.% Makrolon® 3108 550115
- 0,200 Gew.% Tinuvin 360® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 14:

- 99,798 Gew.% Makrolon® 3108 550115
- 0,202 Gew.% Tinuvin 360® der Fa. Ciba

### Beispiel 15:

- 99,800 Gew.% Makrolon® 3108 550115
- 0,200 Gew.% Tinuvin 360® der Fa. Ciba

### Beispiel 16:

- 99,798 Gew.% Makrolon® 3108 550115
- 0,200 Gew.% Tinuvin 1577® der Fa. Ciba
- 0,002 Gew.% 2-[2-Hydroxy-4-(2-ethylhexyl)oxy]phenyl-4,6-di(4-phenyl)phenyl-1,3,5-triazin

### Beispiel 17:

- 99,798 Gew.% Makrolon® 3108 550115
- 0,202 Gew.% Tinuvin 1577® der Fa. Ciba

### Beispiel 18:

- 99,800 Gew.% Makrolon® 3108 550115
- 0,200 Gew.% Tinuvin 1577® der Fa. Ciba

### Beispiel 19:

- 99,798 Gew.% Makrolon® 3108 550115
- 0,200 Gew.% Cyasorb® UV-1164 der Cytec Industries Inc.
- 0,002 Gew.% 2-[2-Hydroxy-4-(2-ethylhexyl)oxy]phenyl-4,6-di(4-phenyl)phenyl-1,3,5-triazin

### Beispiel 20:

- 99,798 Gew.% Makrolon® 3108 550115
- 0,202 Gew.% Cyasorb® UV-1164 der Cytec Industries Inc.

### Beispiel 21:

- 99,800 Gew.% Makrolon® 3108 550115
- 0,200 Gew.% Cyasorb® UV-1164 der Cytec Industries Inc.

### Beispiel 22:

- 99,798 Gew.% Makrolon® 3108 550115
- 0,200 Gew.% Uvinul® 3035 der Fa. BASF AG
- 0,002 Gew.% 2-[2-Hydroxy-4-(2-ethylhexyl)oxy]phenyl-4,6-di(4-phenyl)phenyl-1,3,5-triazin

### Beispiel 23:

- 99,798 Gew.% Makrolon® 3108 550115
- 0,202 Gew.% Uvinul® 3035 der Fa. BASF AG

### Beispiel 24:

- 99,800 Gew.% Makrolon® 3108 550115
- 0,200 Gew.% Uvinul® 3035der Fa. BASF AG

### Beispiel 25:

- 99,798 Gew.% Makrolon® 3108 550115
- 0,200 Gew.% Uvinul® 3039 der Fa. BASF AG
- 0,002 Gew.% 2-[2-Hydroxy-4-(2-ethylhexyl)oxy]phenyl-4,6-di(4-phenyl)phenyl-1,3,5-triazin

### Beispiel 26:

- 99,798 Gew.% Makrolon® 3108 550115
- 0,202 Gew.% Uvinul® 3039 der Fa. BASF AG

### Beispiel 27:

- 99,800 Gew.% Makrolon® 3108 550115
- 0,200 Gew.% Uvinul® 3039der Fa. BASF AG

### Beispiel 28:

- 99,798 Gew.% Makrolon® 3108 550115
- 0,200 Gew.% Uvinul® 3030 der Fa. BASF AG
- 0,002 Gew.% 2-[2-Hydroxy-4-(2-ethylhexyl)oxy]phenyl-4,6-di(4-phenyl)phenyl-1,3,5-triazin

### Beispiel 29:

- 99,798 Gew.% Makrolon® 3108 550115
- 0,202 Gew.% Uvinul® 3030 der Fa. BASF AG

### Beispiel 30:

- 99,800 Gew.% Makrolon® 3108 550115
- 0,200 Gew.% Uvinul® 3030der Fa. BASF AG

### Beispiel 31:

- 99,798 Gew.% Makrolon® 3108 550115
- 0,200 Gew.% Hostavin® B-CAP der Fa. Clariant GmbH
- 0,002 Gew.% 2-[2-Hydroxy-4-(2-ethylhexyl)oxy]phenyl-4,6-di(4-phenyl)phenyl-1,3,5-tri-azin

### Beispiel 32:

- 99,798 Gew.% Makrolon® 3108 550115
- 0,202 Gew.% Hostavin® B-CAP der Fa. Clariant GmbH

### Beispiel 33:

- 99,800 Gew.% Makrolon® 3108 550115
- 0,200 Gew.% Hostavin® B-CAP der Fa. Clariant GmbH

Die Compounds der Beispiele 1 bis 33 werden anschließend zu Probekörpern der Geometrie 63,5 * 12,7 * 3,2 mm³ verarbeitet. Dies geschieht mit einer Arburg Allrounder 270S-500-60 mit einem Schneckendurchmesser von 18 mm.

| Verfahrensparameter | Compounds aus Bespielen 1 bis 33 |
|---|---|
| **Extruderheizzonen** | |
| Extruder Z1 | 290 °C |
| Extruder Z2 | 295 °C |
| Extruder Z3 | 300 °C |
| Extruder Z4 | 300 °C |
| **Werkzeugtemperatur** | 95 °C |
| Einspritzdruck (max.) | 1600 bar |
| Nachdruck (Stützpunkt 1) | 1200 bar |
| Nachdruck (Stützpunkt 2) | 1000 bar |
| Nachdruck (Stützpunkt 3) | 800 bar |
| Staudruck | 100 bar |

An den Probekörpern der Beispiele 1 bis 33 wird anschließend die Lichttransmissionsbestimmungen gemäß ASTM D1003 bestimmt und der Yellowness-Index YI nach ASTM E313 berechnet.

Anschließend werden die Probekörper in einem QUV 1800W der Fa. Q-Panel gemäß ISO 4892-3 analog zu Verfahren 1 bei 60 °C Schwarztafeltemperatur mit 313 nm per Dauerbelichtung bestrahlt.

An den bestrahlten Probenkörper wird anschließend die Lichttransmissionsbestimmungen gemäß ASTM D1003 bestimmt und der Yellowness-Index YI nach ASTM E313 berechnet.

Die Veränderung der optischen Eigenschaften der Probenkörper vor und nach der Bestrahlung wird berechnet. An den bestrahlten und unbestrahlten Probenköper wird die IZOD-Kerbschlagzähigkeit nach ISO 180/4A bei -20 °C ermittelt.

## Patentansprüche

1. Polycarbonatzusammensetzung enthaltend 0,1 Gew-% bis 0,35 Gew-% eines UV-Absorbers und 0,0001 Gew-% bis 0,005 Gew-% 2-[2-Hydroxy-4-(2-ethylhexyl)oxy]phenyl-4,6-di(4-phenyl)phenyl-1,3,5-triazin (CAS No. 204583-39-1), wobei der UV-Absorber ausgewählt ist aus der Gruppe der Verbindungen enthaltend
a. UV-Absorber der Formel (4): 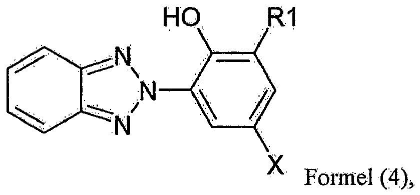 wobei R1 und X gleich oder verschieden und H oder Alkyl oder Alkylaryl sein können,
b. UV-Absorber der Formel (6): 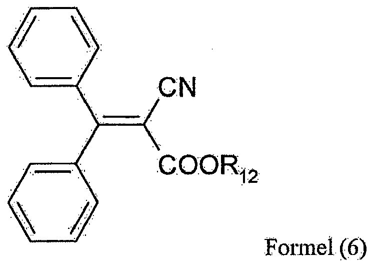 worin R₁₂ Aryl oder Alkyl bedeutet,
c. 2-(5-chloro-2H-benzotriazol-2-yl)-6-(1,1-dimethylethyl)-4-methyl)-phenol,
d. 1,3-bis-[(2'-cyano-3',3'-diphenylacryloyl)oxy]-2,2-bis-{[(2'-cyano-3',3'-diphenylacryloyl)oxy]methyl}-propan (CAS No. 178671-58-4).

2. Verfahren zur Herstellung einer Zusammensetzung nach Anspruch 1, **dadurch gekennzeichnet dass** Polycarbonat und 0,1 Gew-% bis 0,35 Gew-% eines UV-Absorbers und 0,0001 Gew-% bis 0,005 Gew-% der Verbindung 2-[2-Hydroxy-4-(2-ethylhexyl)oxy]phenyl-4,6-di(4-phenyl)phenyl-1,3,5-triazin (CAS No. 204583-39-1) zusammengeführt und vermischt werden.

3. Platte, enthaltend die Zusammensetzung nach Anspruch 1.

4. Platte nach Anspruch 3, wobei die Platte eine Massiv- oder Stegplatte ist.

5. Platte nach Anspruch 3, wobei die Platte eine Mehrschichtplatte ist, welche eine Basisschicht aufweist, wobei die Basisschicht die Zusammensetzung enthält.

6. Verfahren zur Herstellung einer Platte nach Anspruch 3, umfassend die Schritte Extrudieren oder Coextrudieren einer Zusammensetzung nach Anspruch 1.

7. Zusammensetzung gemäß Anspruch 1, **dadurch gekennzeichnet, dass** der UV-Absorber und 2-[2-Hydroxy-4-(2-ethylhexyl)oxy]phenyl-4,6-di(4-phenyl)phenyl-1,3,5-triazin (GAS No. 204583-39-1) in einem Gewichtsverhältnis von 5000 : 1 bis 30 : 1, bevorzugt 500 : 1 bis 30: 1, besonders bevorzugt 500 : 1 bis 70 : 1 vorliegen.

## Claims

1. Polycarbonate composition comprising from 0.1 wt.% to 0.35 wt.% of a UV absorber and from 0.0001 wt.% to 0.005 wt.% 2-[2-hydroxy-4-(2-ethylhexyl)oxy]-phenyl-4,6-di(4-phenyl)phenyl-1,3,5-triazine (CAS No. 204583-39-1), where the UV absorber is selected from the group of the compounds comprising
a. UV absorbers of the formula (4): 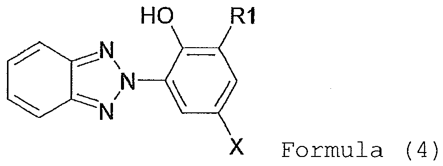 where R1 and X are the same or different and can be H or alkyl or alkylaryl,
b. UV absorbers of the formula (6): 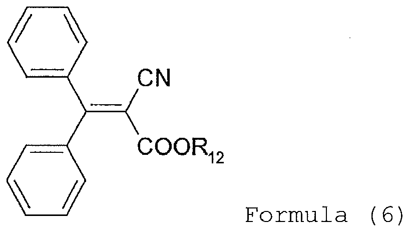 wherein R₁₂ is aryl or alkyl,
c. 2-(5-chloro-2H-benzotriazol-2-yl)-6-(1,1-dimethylethyl)-4-methyl)-phenol,
d. 1,3-bis-[(2'-cyano-3',3'-diphenylacryloyl)-oxy]-2,2-bis-{[(2'-cyano-3',3'-diphenylacryloyl)-oxy]methyl}-propane (CAS No. 178671-58-4).

2. Process for the production of a composition according to claim 1, **characterised in that** polycarbonate and from 0.1 wt.% to 0.35 wt.% of a UV absorber and from 0.0001 wt.% to 0.005 wt.% of the compound 2-[2-hydroxy-4-(2-ethylhexyl)oxy]-phenyl-4,6-di(4-phenyl)phenyl-1,3,5-triazine (CAS No. 204583-39-1) are combined and mixed.

3. Sheet comprising the composition according to claim 1.

4. Sheet according to claim 3, where the sheet is a solid or multi-wall sheet.

5. Sheet according to claim 3, where the sheet is a multi-layer sheet which has a base layer, where the base layer comprises the composition.

6. Process for the production of a sheet according to claim 3, comprising the steps of extruding or coextruding a composition according to claim 1.

7. Composition according to claim 1, **characterised in that** the UV absorber and 2-[2-hydroxy-4-(2-ethylhexyl)oxy]phenyl-4,6-di(4-phenyl)phenyl-1,3,5-triazine (CAS No. 204583-39-1) are present in a ratio by weight of from 5000:1 to 30:1, preferably from 500:1 to 30:1, particularly preferably from 500:1 to 70:1.

## Revendications

1. Composition de polycarbonate contenant 0,1 % en poids à 0,35 % en poids d'un absorbeur d'UV et 0,0001 % en poids à 0,005 % en poids de 2-[2-hydroxy-4-(2-éthylhexyl)oxy]phényl-4,6-di(4-phényl)phényl-1,3,5-triazine (n° CAS 204583-39-1), l'absorbeur d'UV étant choisi dans le groupe de composés contenant :
a. les absorbeurs d'UV de formule (4) : 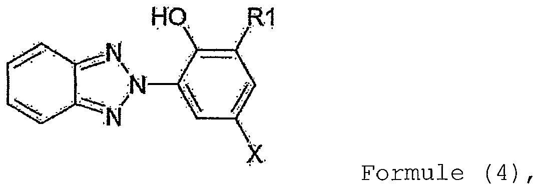 dans laquelle R1 et X peuvent être identiques ou différents, et représenter H ou alkyle ou alkylaryle,
b. les absorbeurs d'UV de formule (6) 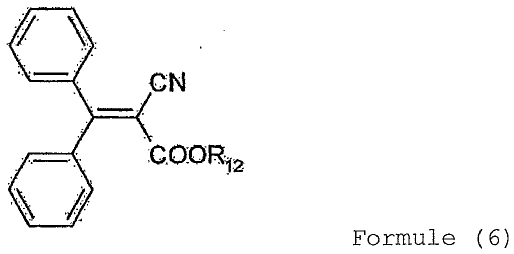 dans laquelle R₁₂ signifie aryle ou alkyle,
c. le 2-(5-chloro-2H-benzotriazol-2-yl)-6-(1,1-diméthyléthyl)-4-méthyl)-phénol,
d. le 1,3-bis-[(2'-cyano-3',3'-diphénylacryloyl)oxy]-2,2-bis-{[(2'-cyano-3',3'-diphénylacryloyl)oxy]méthyl}-propane (n° CAS 178671-58-4).

2. Procédé de fabrication d'une composition selon la revendication 1, **caractérisé en ce qu'**un polycarbonate et 0,1 % en poids à 0,35 % en poids d'un absorbeur d'UV et 0,0001 % en poids à 0,005 % en poids du composé 2-[2-hydroxy-4-(2-éthylhexyl)oxy]phényl-4,6-di(4-phényl)phényl-1,3,5-triazine (n° CAS 204583-39-1) sont réunis et mélangés.

3. Plaque, contenant la composition selon la revendication 1.

4. Plaque selon la revendication 3, dans laquelle la plaque est une plaque massive ou alvéolaire.

5. Plaque selon la revendication 3, dans laquelle la plaque est une plaque multicouche, qui comprend une couche de base, la couche de base contenant la composition.

6. Procédé de fabrication d'une plaque selon la revendication 3, comprenant les étapes d'extrusion ou de co-extrusion d'une composition selon la revendication 1.

7. Composition selon la revendication 1, **caractérisée en ce que** l'absorbeur d'UV et la 2-[2-hydroxy-4-(2-éthylhexyl)oxy]phényl-4,6-di(4-phényl)phényl-1,3,5-triazine (n° CAS 204583-39-1) sont présents en un rapport en poids de 5 000:1 à 30:1, de préférence de 500:1 à 30:1, de manière particulièrement préférée de 500:1 à 70:1.
